# NEUE EUROPÄISCHE PATENTSCHRIFT

(11) **EP 2 089 637 B2**
(45) Veröffentlichungstag und Bekanntmachung des Hinweises auf die Entscheidung über den Einspruch: **15.06.2016**
(45) Hinweis auf die Patenterteilung: 13.07.2011
(21) Anmeldenummer: 07820460.9
(22) Anmeldetag: 21.09.2007
(51) Int. Cl.: F16F 9/05

(54) **LUFTFEDEREINRICHTUNG**
AIR SPRING DEVICE
DISPOSITIF DE SUSPENSION PNEUMATIQUE

(30) Priorität: 07.11.2006 DE 102006052314
(43) Veröffentlichungstag der Anmeldung: 19.08.2009
(73) Patentinhaber: Continental Teves AG & Co. OHG, 60488 Frankfurt (DE)
(72) Erfinder: OLDENETTEL, Holger, 30900 Wedemark (DE); PHILIPPS, Mark, 30890 Barsinghausen (DE)
(86) Internationale Anmeldenummer: PCT/EP2007/060038
(87) Internationale Veröffentlichungsnummer: WO 2008/055744

(56) Entgegenhaltungen:
- DE-A1- 10 163 819
- DE-A1- 19 753 637
- DE-U1- 29 823 508

## Beschreibung

Die Erfindung betrifft ein Verfahren zur Herstellung eines Luftfederbalges für eine Luftfedereinrichtung mit einem Luftfederbalg aus elastomerem Material, einem Luftfederdeckel und einem Luftfederkolben, wobei der im Betriebszustand im Wesentlichen freistehende Luftfederbalg unter Ausbildung einer ersten Rollfalte mit seinem ersten Ende am Luftfederkolben und unter Ausbildung einer zweiten (Roll-)Falte am Luftfederdeckel mit seinem zweiten Ende luftdicht befestigt ist und zusammen mit dem Luftfederdeckel und dem Luftfederkolben eine volumenelastische Hohlkammer bildet, wobei die Luftfedereinrichtung eine hülsenförmige, den Luftfederbalg tangential umfassende Außenführung und mindestens einen innerhalb des Luftfederbalges angeordneten Innenspannring aufweist, wobei die Außenführung mit Hilfe des Innenspannringes an der Außenoberfläche des Luftfederbalges kraft- und/oder formschlüssig zu befestigen ist.

Luftfedereinrichtungen, auch kurz Luftfedern genannt, die zwischen Fahrwerk und Karosserie eingespannt sind und die einen Luftfederbalg-aufweisen, der wiederum zwischen einem z.B. fahrwerkseitigen Luftfederdeckel und einem karosserieseitigen Abrollkolben befestigt ist, sind in eine Vielzahl von Ausführungen bekannt. Die Luftfeder steht im Betrieb unter einem inneren Überdruck. Der Luftfederbalg rollt unter Last und bei Federbewegungen unter Bildung einer Rollfalte auf der Außenkontur eines konzentrischen Bauteiles ab, üblicherweise auf dem Luftfederkolben/Abrollkolben. Eine derartige Luftfeder wird häufig in Straßen- oder Schienenfahrzeugen eingesetzt, um eine komfortable Federung zu erreichen. Die Luftfeder steht im Betrieb unter einem inneren Überdruck.

Dabei existieren sowohl Luftfedern, bei denen der Luftfederbalg nur einseitig eine Rollfalte bildet, nämlich in der Regel auf dem Abrollkolben, oder Luftfedern, bei denen der Rollbalg unter Bildung einer beidseitigen (Roll-)Falte zwischen Luftfederdeckel und Abrollkolben eingespannt ist. Luftfedern mit einseitiger Rollfalte sind oft in Pkw zu finden, während die oft größeren und tragfähigeren Luftfedern mit beidseitiger Rollfalte eher in LKW und Schienenfahrzeuge eingebaut werden.

Zur Steigerung eines komfortablen Federungsverhaltens und zur Reduktion des so genannten Harshness-Verhaltens sind zudem dünne, d.h. dünnwandige Rollbälge gewünscht. Der Fachmann versteht unter dem Begriff "Harshness" ein überlagertes, etwas raues, hartes Federungsverhalten bei Schwingungen höherer Frequenz und geringer Amplitude, das durch die Abhängigkeiten von den für Luftfeder- und Dämpfereinheiten gebräuchlichen Bauweisen, Materialien, Eigendämpfungen, Trägheiten etc. entsteht.

Um aber bei dünneren Rollbälgen eine genügende Tragfähigkeit des Gesamtsystems zu erreichen, werden die Rollbälge bzw. die Luftfedern oder -dämpfer mit so genannten Außenführungen zu versehen, nämlich mit einem den Rollbalg umgebenden rohrförmigen "Stützkorsett" oder Stützkörper. So lässt sich beispielsweise ein dünner Rollbalg mit einem dünnen Leichtmetallrohr als Stützkörper auf hohe Innendrücke und damit hohe Tragfähigkeiten bei gleichzeitig gutem Harshness -Verhalten optimieren.

Die Außenführungen sind so angeordnet, dass der Rollbalg einerseits an der Außenseite des Abrollkolbens und andererseits an der Innenoberfläche der Außenführung abrollen kann.

Üblicherweise rollt also bei Luftfedern mit Doppelfalte als auch bei solchen mit nur einer Falte der Luftfederbalg bei Federbewegungen unter Beibehaltung der Rollfalte im Wesentlichen auf der Außenkontur des Luftfederkolbens ab. Bei Luftfedern mit doppelter / beidseitiger Rollfalte wird ein Abrollen der am Luftfederdeckel befindliche Rollfalte an Deckelbauteilen durch eine entsprechende Formgebung des Deckels minimiert oder ganz verhindert, damit eine stets definierte Lage der einzelnen Elemente der Luftfedereinrichtung gewährleistet ist.

In der Regel weisen diejenigen Luftfedern, bei denen der Luftfederbalg nur einseitig eine Rollfalte bildet, unterschiedliche Durchmesser in den unterschiedlichen Befestigungsbereichen der Luftfeder am Luftfederdeckel und am Luftfederkolben auf So ist z.B. der Luftfederbalg des in der DE 197 53 637 offenbarten Luftfedersystems an einem einen relativ großen Durchmesser aufweisenden Luftfederdeckel und unter Bildung nur einer Rollfalte an einem wesentlich kleineren Abrollkolben befestigt. Bei dieser Konstruktion ist leicht möglich, eine Außenführung in Form eine den Luftfederbalg umgebenden und außen abstützenden Hülse an dem größeren Durchmesse des Luftfederdeckels zu befestigen. Die Befestigung als solche ist einfach über Spannringe am festen Deckel zu erreichen und der große Durchmesser der Außenführung lässt genügend Platz für die Ausbildung der Rollfalte.

Wenn jedoch die Außenführung - beispielsweise bei einer doppelten Rollfalte - nur vom Luftfederbalg selbst gehalten werden muss, so gestaltet sich die Befestigung eher schwierig, insbesondere dann, wenn eine lange Lebensdauer gefordert wird. Lösungen, die eine Befestigung wie Kleben oder Vulkanisieren vorschlagen, sind zwar machbar, weisen jedoch nicht immer die gewünschte Dauerfestigkeit auf.

Die DE 298 23 508 U1 zeigt eine solche Befestigung und offenbart zum Kleben und Vulkanisieren auch noch die Alternativen des Einbördelns oder des Klemmens durch Aufweiten eines innen liegenden Klemmringes. Das dort beschriebene Aufweiten ist jedoch mangels näherer Spezifizierung wohl nur als theoretische Möglichkeit der Befestigung anzusehen. Einerseits sind eine über den Umfang gleichmäßige Position und ein ausreichendes Ausmaß an Dehnung eines Klemmringes zur Montage kaum möglich, wenn ein Klemmring im noch unbelasteten Zustand des Luftfederbalges in letzteren eingelegt wird. Andererseits ist ein Einbringen eines Klemmringes in einen unter Innendruck bereits geweiteten Luftfederbalg bisher noch nicht durchgeführt worden und vermutlich nur mit größtem Aufwand machbar.

Die DE 10 163 819 A1 zeigt eine Luftfedereinrichtung.

Für die Erfindung bestand also die Aufgabe, ein Verfahren zur Herstellung eines mit einem Innenspannring versehenen Luftfederbalges für eine Luftfedereinrichtung bereitzustellen. Bei der im Wesentlichen freistehenden Luftfeder mit Doppelfalte und Außenführung soll die Außenführung sicher, einfach und ohne hohen Montageaufwand zu befestigen sein und bei der Auslegung auf die Fahrzeuglebensdauer kein Probleme bereiten.

Gelöst wird diese Aufgabe durch die Merkmale des Hauptanspruchs. Weitere vorteilhafte Ausbildungen sind in den Unteransprüchen offenbart.

Dabei ist der Außendurchmesser des Innenspannringes größer ist als der Außendurchmesser des Luftfederbalgs im druckentlasteten Zustand und der Innenspannring erzeugt im drucklosen Luftfederbalg eine radial nach außen weisende umlaufende Ausbauchung, die im Wesentlichen mit dem Innendurchmesser der Außenführung korrespondiert. Dadurch ist es auf einfache Weise möglich, eine freistehende Luft-feder mit einer Außenführung/Außenführungshülse sicher zu verbinden. Durch den dann bereits im Zuliefer- oder Montagezustand innerhalb des Luftfederbalges positionierten sowie durch die Rückstellkräfte des Luftfederbalges fixierten Innenspannring und durch die damit an einer Stelle des Rollbalges geschaffene feste Ringform/Kesselform lässt sich die Außenführung durch einfache Verfahren aufbringen, wie etwa aufschrumpfen, aufklemmen, thermoschrumpfen, kleben etc. Durch die feste Ringform ist auch die Haltbarkeit der Verbindung auf Lebensdauer gewährleistet.

Der Luftfederdeckel und der Luftfederkolben können im jeweiligen Befestigungsbereich der Enden des Luftfederbalges einen im Wesentlichen gleichen Durchmesser aufweisen. Dadurch wird der Luftfederbalg auf einfache Weise für freistehende Luftfedern beliebiger Abmessungen nutzbar, insbesondere dann, wenn der Außendurchmesser des Innenspannringes größer ist als der Durchmesser der jeweiligen Befestigungsbereiche von Luftfederdeckel und Luftfederkolben.

Die Außenführung kann mit Hilfe eines stauch- oder spreizbaren Innenspannringes an der Außenoberfläche des Luftfederbalges geklemmt sein. Damit lässt sich die Klemmwirkung, die erst durch die mittels Innenspannring radial nach außen ausgebauchte Balgform ermöglicht wird, noch weiter verstärken.

Der Außendurchmesser des Innenspannringes kann mindestens 15 mm, vorzugsweise 20 mm größer sein als der Außendurchmesser des Luftfederbalges im Herstellungszustand. Die dabei erreichte Anbindung der Außenführung an den Luftfederbalg stellt eine sichere Befestigung bei gängigen PKW- und LKW-Rollbälgen in allen Fahrzuständen bereit.

Der Luftfederbalg wird mit Hilfe des erfindungsgemäßen Umschlag-Verfahrens mit dem Innenspannring versehen, wobei
a) der Luftfederbalg auf einen im Wesentlichen zylindrischen Blähbalg anliegend und letzteren mindestens teilweise umhüllend aufgebracht und mit mindestens einem seiner Enden an zum Blähbalg gehörigen Endstücken luftdicht angeschlossen wird, wobei mindestens eines der Endstücke topfförmig den Blähbalg umgebend und mindestens eines der Endstücke des Blähbalges relativ zum anderen Endstück verfahrbar und Blähbalglänge verkürzend ausgebildet ist,
b) der Blähbalg zur Aufweitung des anliegenden Luftfederbalges unter Innendruck gesetzt wird,
c) die Endstücke bei aufgeblähtem Blähbalg bzw. Luftfederbalg soweit im Sinne einer Verkürzung der wirksamen Blähbalglänge bzw. einer Verkürzung des Abstandes zwischen den Endstücken zusammengefahren werden, dass ein Ende des Blähbalges bzw. Luftfederbalges in Form einer Umschlagfalte über das topfförmige Ende umgebuckt/umgeschlagen wird,
d) der Blähbalg unter teilweiser Rückführung der Verkürzung teilweise druckentlastet wird, wodurch die Aufweitung und der Umschlag des Blähbalges zurückgeführt werden, jedoch der Umschlag des Luftfederbalges erhalten bleibt,
e) der Innenspannring über dem Blähbalg und an der innerhalb des Luftfederbalges vorgesehenen Spannstelle positioniert wird,
f) der Blähbalg vollständig druckentlastet und die Endstücke im Sinne einer Verlängerung der wirksamen Blähbalglänge auseinander gefahren werden
g) der umgeschlagene Teil des Luftfederbalges unter Luftdruck gesetzt wird, wobei der Umschlag des Luftfederbalges zurückklappt und der in seinen Ausgangszustand / Herstellzustand zurückgeführte Luftfederbalg den Innenspannring unter Bildung einer radial nach außen weisenden umlaufenden Ausbauchung fixiert, wonach
h) der Luftfederbalg vom Fertigungs-Dorn / von den Endstücken abgenommen wird.

Durch ein solches Verfahren ergibt sich die Möglichkeit, mit mindesten halbautomatischen Fertigungseinrichtungen und auf einfache Weise montagefertige Luftfederbälge zum Einsatz in den Luftfedereinrichtungen herzustellen.

Der Blähbalg kann dabei vorteilhafterweise einen längen veränderlichen Fertigungs Dom umhüllen, so dass die Menge an Druckmedium für das Aufblähen und Umschlagen reduziert wird.

Eine vorteilhafte Ausbildung des Verfahrens besteht darin, dass der Blähbalg in einem vorgegeben Blähzustand als Montageführung für den Innenspannringes dient. Damit erspart man sich separate Zufuhr- oder Führungseinrichtungen für das genaue Positionieren des Innenspannringes. Der Innenspannring fällt dann, geführt vom Blähbalg, bis auf den Innenumfang des Umschlages des Luftfederbalges, d.h. bis an die Spannstelle und wird beim Zurückklappen des Luftfederbalges fixiert.

Anhand eines Ausführungsbeispieles soll die Erfindung näher erläutert werden. Es zeigen
- Fig. 1: eine Luftfedereinrichtung
- Fig. 2: einen Luftfederbalg im drucklosen Einbauzustand/Montagezustand
- Fig. 3-5: das erfindungsgemäße Verfahren zur Herstellung eines mit einem Innenspannring versehenen Luftfederbalges in Form von Prinzipskizzen

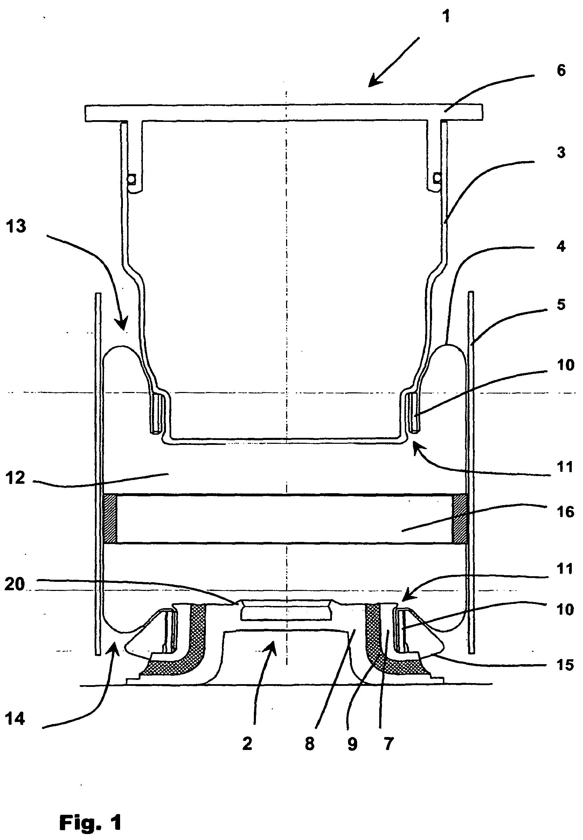

Die Fig. 1 zeigt eine Luftfedereinrichtung 1, die einen hier unten angeordneten Luftfederdeckel 2, einen im oberen Teil angeordneten Luftfederkolben 3 und einen Luftfederbalg 4 aufweist. Der Luftfederbalg 4 ist von einer hülsenförmigen Außenführung 5 umschlossen. Der Luftfederkolben weist ein oberes Anschlussteil 6 auf zur Anbindung z. B. an eine Karosserie.

Der Luftfederdeckel 2 ist zweiteilig aufgebaut und weist einen Innenkonus 7 und ein Basisteil 8 auf, die durch eine Gummischicht 9 fest miteinander zusammenvulkanisiert sind.

Der Luftfederbalg 4 ist mit Klemmringen 10 jeweils auf Klemmsitzen 11 des Luftfederkolbens 3 und des Innenkonus 7 des Luftfederdeckels 2 luftdicht verpresst und bildet zwischen Luftfederkolben 3 und Luftfederdeckel 2 einen volumenelastischen Hohlraum 12, der mit einem Überdruck beaufschlagbar ist. Dieser Überdruck sorgt dafür, dass der Luftfederbalg 4 eine Rollfalte 13 und eine weitere Falte 14 bildet. Die Rollfalte 13 rollt bei axialen Relativbewegungen von Luftfederkolben 4 und Luftfederdeckel 2 auf dem Luftfederkolben ab. Bei der Falte 14 wird ein Abrollen am Luftfederdeckel durch eine entsprechende Formgebung des Deckels minimiert bzw. ganz verhindert. Dazu ist der Luftfederbalg 4 deckelseitig durch einen Formring 15 gestützt, so dass er nicht zu stark über den Luftfederdeckel 2 abrollt. Der Überdruck im Hohlraum 12 presst außerdem den Luftfederbalg 4 von Innen gegen die Außenführung 5. Der Luftfederbalg 4 wird dadurch gestützt, so dass seine radiale Ausdehnung das durch die Außenführung 5 vorgegebene und die Federcharakteristik erheblich bestimmende Maß nicht überschreitet.

Die Luftfedereinrichtung 1 weist einen Innenspannring 16 aus Aluminium auf, mit dem die ebenfalls aus Aluminium bestehende hülsenförmige Außenführung 5 an dem Luftfederbalg 4 befestigt ist und diesen umgibt. Durch eine solche stabile Außenführung ist es möglich, einen relativ dünnen Balg zu verwenden, der ein gutes Harshness-Verhalten aufweist.

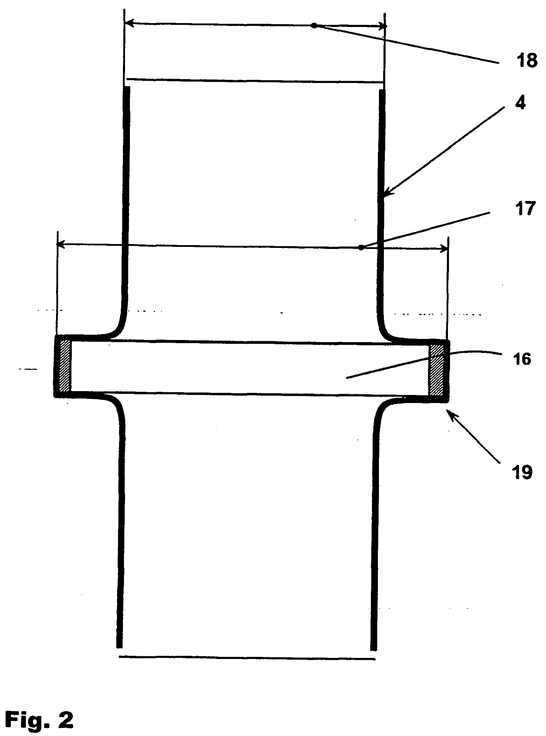

Die Fig. 2 zeigt einen Luftfederbalg 4 im drucklosen Einbauzustand/Montagezustand mit bereits eingebrachtem Innenspannring 16 im Prinzip. Der Außendurchmesser 17 des Innenspannringes 16 ist wesentlich größer ist als der Außendurchmesser 18 des Luftfederbalgs 4 im druckentlasteten Zustand. Der Innenspannring erzeugt somit im drucklosen Luftfederbalg eine radial nach außen weisende umlaufende Ausbauchung 19, die im Wesentlichen mit dem Innendurchmesser der später aufgebrachten Außenführung 5 korrespondiert.

Die Fig. 2 zeigt in Verbindung mit der Fig. 1, dass der Luftfederdeckel 2 und der Luftfederkolben 3 im jeweiligen Befestigungsbereich oder Klemmsitz 11 für die Enden des Luftfederbalges 4 einen im Wesentlichen gleichen Durchmesser aufweisen, nämlich etwa den Außendurchmesser 18 des Luftfederbalgs 4 im druckentlasteten Zustand. Der Außendurchmesser 17 des Innenspannringes 16 ist dabei ebenfalls größer ist als der Durchmesser der jeweiligen Befestigungsbereiche.

Durch den nach der Montage angelegten Überdruck im Hohlraum 12 und unter Last wird der Luftfederbalg 4 dann von der in Fig. 2 dargestellten Form unter Ausbildung der Rollfalten in die in der Fig. dargestellte Form überführt und von Innen gegen die Außenführung 5 gepresst.

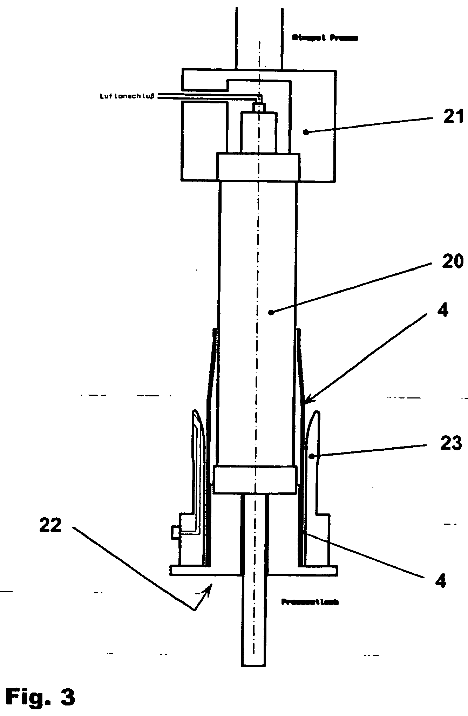

Die Fig.3 bis 5 zeigen anhand von Prinzipskizzen das erfindungsgemäße Verfahren zur Herstellung eines mit einem Innenspannring versehenen Luftfederbalges für eine Luftfedereinrichtung. Das Verfahren besteht, wie im Weiteren näher erläutert wird, darin, dass der Luftfederbalg mit Hilfe eines besonderen Umschlag-Verfahrens mit dem Innenspannring versehen wird.

Fig. 3 zeigt den Luftfederbalg 4, wie er auf einen im Wesentlichen zylindrischen Blähbalg 20 anliegend aufgebracht ist und letzteren an seinem unteren Ende umhüllt. Der Luftfederbalg 4 wird dabei und mit seinem unteren Ende an dem unteren der zum Blähbalg 20 gehörigen Endstücke 21 und 22 luftdicht angeschlossen. Das untere Endstück 22 umgibt die Bälge, also Blähbalg 20 und aufgelegten Luftfederbalg 4 topfförmig mit einem Umschlagkragen 23.

Mindestens eines der Endstücke 21, 22 des Blähbalges ist relativ zum anderen Endstück verfahrbar, wodurch die Blähbalglänge bzw. der Abstand zwischen den Endstücken 21 und 22 während des Umschlagprozesses / Umbuckverfahrens verkürzt werden kann.

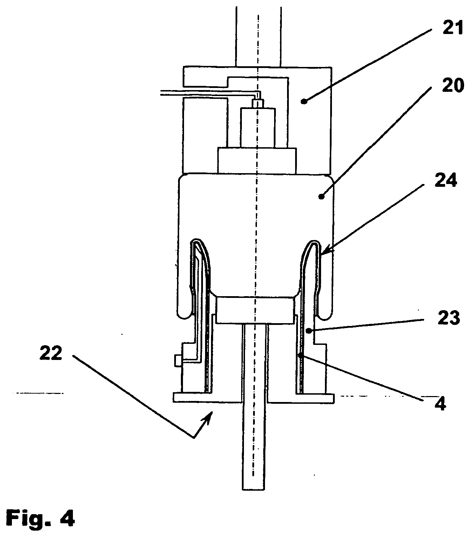

Fig. 4 zeigt nun, wie der Blähbalg 20 zur Aufweitung des anliegenden Luftfederbalges 4 unter Innendruck gesetzt ist und die Endstücke bei aufgeblähtem Blähbalg bzw. Luftfederbalg bereits unter Verkürzung des Abstandes zwischen den Endstücken 21 und 22 zusammengefahren sind. Dabei wird das untere Ende des Blähbalges 20 bzw. Luftfederbalges 4 in Form eines Umschlages 24 über das als Umschlagkragen 23 ausgebildete topfförmige Ende umgebuckt/umgeschlagen.

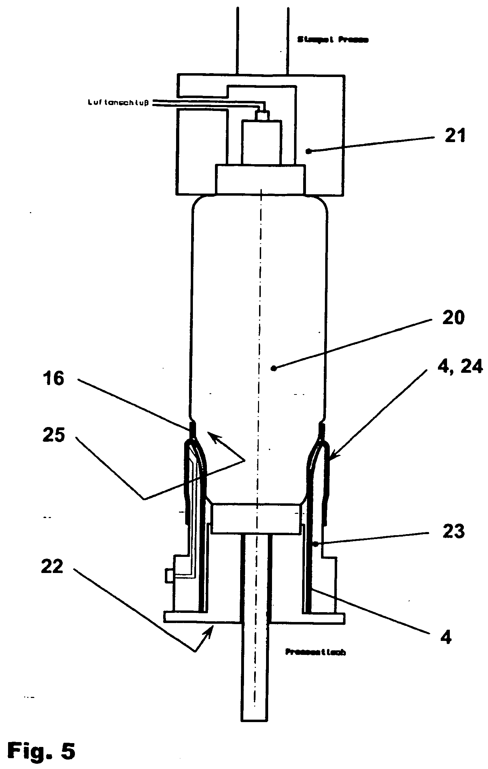

Danach wird der Blähbalg 20, wie Fig. 5 zeigt, unter teilweiser, nämlich fast vollständiger Rückführung der Verkürzung teilweise druckentlastet, wodurch die Aufweitung und der Umschlag des Blähbalges zurückgeführt werden. Der Umschlag 24 des Luftfederbalges 4 bleibt jedoch erhalten. In diesem Zustand wird der Innenspannring 16 von oben über den Blähbalg geschoben und an der innerhalb des Luftfederbalges vorgesehenen Spannstelle 25 positioniert.

Danach erfolgt ein weiterer, hier nicht näher dargestellter abschließender Schritt, bei dem der Blähbalg vollständig druckentlastet und in den in der Fig. 1 dargestellten Zustand zurückgefahren wird. Die Endstücke sind dann wieder vollständig auseinander und in ihren jeweiligen Endpunkt gefahren, der Blähbalg hat wieder seine maximale Länge.

Dann wird noch der umgeschlagene Teil des Luftfederbalges 4 mit Hilfe von innerhalb des Umschlagskragens verlaufenden und unter den Umschlag austretenden Luftkanälen unter Luftdruck gesetzt, wobei der Umschlag 24 des Luftfederbalges 4 zurückklappt und der in seinen Ausgangszustand / Montagezustand zurückgeführte Luftfederbalg 4 den Innenspannring unter Bildung einer radial nach außen weisenden umlaufenden Ausbauchung 19 fixiert, wie in Fig. 2 gezeigt. Der Luftfederbalg wird dann vom Blähbalg / von den Endstücken abgenommen und dann mit der Außenführung 5 in die Luftfedereinrichtung 1 eingebaut.

### Bezugszeichenliste

### (Teil der Beschreibung)

- 1: Luftfedereinrichtung
- 2: Luftfederdeckel
- 3: Luftfederkolben
- 4: Luftfederbalg
- 5: Außenführung
- 6: Anschussteil
- 7: Innenkonus
- 8: Basisteil
- 9: Gummischicht
- 10: Klemmring
- 11: Klemmsitz/Befestigungsbereich 12 Hohlraum
- 13: Rollfalte
- 14: Falte
- 15: Formring
- 16: Innenspannring
- 17: Außendurchmesser des Innenspannringes
- 18: Außendurchmesser des Luftfederbalges 19 Ausbauchung
- 20: Blähbalg
- 21: Endstück
- 22: Endstück
- 23: Umschlagkragen
- 24: Umschlag
- 25: Spannstelle

## Patentansprüche

1. Verfahren zur Herstellung eines mit einem Innenspannring versehenen Luftfederbalges (4) für eine Luftfedereinrichtung (1) mit einem Luftfederbalg (4) aus elastomerem Material, einem Luftfederdeckel (2) und einem Luftfederkolben (3), wobei der im Betriebszustand im Wesentlichen freistehende Luftfederbalg (4) unter Ausbildung einer ersten Rollfalte (13) mit seinem ersten Ende am Luftfederkolben (3) und unter Ausbildung einer zweiten Rollfalte (14) mit seinem zweiten Ende am Luftfederdeckel (2) luftdicht befestigt ist und zusammen mit dem Luftfederdeckel (2) und dem Luftfederkolben (3) eine volumenelastische Hohlkammer (12) bildet, wobei die Luftfedereinrichtung (1) eine hülsenförmige, den Luftfederbalg (4) tangential umfassende Außenführung (5) und mindestens einen innerhalb des Luftfederbalges (4) angeordneten Innenspannring (16) aufweist, wobei die Außenführung (5) mit Hilfe des Innenspannringes (16) an der Außenoberfläche des Luftfederbalges (4) kraft- und/oder formschlüssig zu befestigen ist, wobei der Außendurchmesser (17) des Innenspannringes (16) größer ist als der Außendurchmesser (18) des Luftfederbalgs (4) im druckentlasteten Zustand und der Innenspannring im drucklosen Luftfederbalg eine radial nach außen weisende umlaufende Ausbauchung (19) erzeugt, die im Wesentlichen mit dem Innendurchmesser der Außenführung (5) korrespondiert, **dadurch gekennzeichnet, dass** der Luftfederbalg (4) mit Hilfe eines Umschlag-Verfahrens mit dem Innenspannring (16) versehen wird, wobei
a) der Luftfederbalg (4) auf einen im Wesentlichen zylindrischen Blähbalg (20) anliegend und letzteren mindestens teilweise umhüllend aufgebracht und mit mindestens einem seiner Enden an zum Blähbalg gehörigen Endstücken (21, 22) luftdicht angeschlossen wird, wobei mindestens eines der Endstücke topfförmig den Blähbalg umgebend und mindestens eines der Endstücke des Blähbalges relativ zum anderen Endstück verfahrbar und Blähbalglänge verkürzend ausgebildet ist,
b) der Blähbalg zur Aufweitung des anliegenden Luftfederbalges unter Innendruck gesetzt wird,
c) die Endstücke bei aufgeblähtem Blähbalg bzw. Luftfederbalg (4) soweit im Sinne einer Verkürzung der wirksamen Blähbalglänge bzw. einer Verkürzung des Abstandes zwischen den Endstücken (21, 22) zusammengefahren werden, dass ein Ende des Blähbalges bzw. Luftfederbalges (4) in Form einer Umschlagfalte (24) über das topfförmige Ende umgebuckt/umgeschlagen wird,
d) der Blähbalg (20) unter teilweiser Rückführung der Verkürzung teilweise druckentlastet wird, wodurch die Aufweitung und der Umschlag des Blähbalges zurückgeführt werden, jedoch der Umschlag des Luftfederbalges (4) erhalten bleibt,
e) der Innenspannring (16) über dem Blähbalg und an der innerhalb des Luftfederbalges (4) vorgesehenen Spannstelle (25) positioniert wird,
f) der Blähbalg vollständig druckentlastet und die Endstücke (21, 22) im Sinne einer vollständigen Rückführung der Verkürzung auseinander gefahren werden,
g) der umgeschlagene Teil des Luftfederbalges (4) unter Luftdruck gesetzt wird, wobei auch der Umschlag (24) des Luftfederbalges (4) zurückklappt und der in seinen Ausgangszustand / Herstellzustand zurückgeführte Luftfederbalg (4) den Innenspannring (16) unter Bildung einer radial nach außen weisenden umlaufenden Ausbauchung (19) fixiert, wonach
h) der Luftfederbalg vom Blähbalg / von den Endstücken abgenommen wird.

2. Verfahren nach Anspruch 1, **dadurch gekennzeichnet, dass** der Blähbalg einen längenveränderlichen Fertigungs-Dorn umhüllt.

3. Verfahren nach Anspruch 1 oder 2, **dadurch gekennzeichnet, dass** der Blähbalg in einem vorgegeben Blähzustand als Montageführung für den Innenspannringes nutzbar ist.

## Claims

1. Method for manufacturing an air spring bellows (4), provided with an internal clamping ring, for an air spring device (1) having an air spring bellows (4) made of elastomer material, an air spring cover (2) and an air spring piston (3), wherein the air spring bellows (4) which is essentially self-supporting in the operating state is attached in an airtight fashion by its first end the air spring piston (3) so as to form a first rolling fold (13), and by its second end to the air spring cover (2) so as to form a second rolling fold (14), and together with the air spring cover (2) and the air spring piston (3) forms a hollow chamber (12) with an elastic volume, wherein the air spring device (1) has a sleeve-shaped external guide (5) which surrounds the air spring bellows (4) tangentially, and at least one internal clamping ring (16) which is arranged inside the air spring bellows (4), wherein the external guide (5) is to be attached in a frictionally and/or positively locking fashion to the external surface of the air spring bellows (4) using the internal clamping ring (16), wherein the external diameter (17) of the internal clamping ring (16) is larger than the external diameter (18) of the air spring bellows (4) in the pressure-relieved state, and the internal clamping ring in the pressureless air spring bellows produces a circumferential protrusion (19) which points radially outward and corresponds essentially to the internal diameter of the external guide (5), **characterized in that** the air spring bellows (4) is provided with the internal clamping ring (16) using a folding-over method, wherein
a) the air spring bellows (4) is applied in such a way that it bears on an essentially cylindrical inflating bellows (20) and at least partially surrounds the latter and is connected in an airtight fashion by at least one of its ends to end pieces (21, 22) which are associated with the inflating bellows, wherein at least one of the end pieces is embodied in a pot-shape in such a way that it surrounds the inflating bellows, and at least one of the end pieces of the inflating bellows is embodied in such a way that it can move relative to the other end piece and shortens the length of the inflating bellows,
b) the inflating bellows is placed under internal pressure in order to widen the air spring bellows bearing against it,
c) when the inflating bellows or air spring bellows (4) are inflated, the end pieces are moved together, with the effect of shortening the effective length of the inflating bellows or shortening the distance between the end pieces (21, 22), to such an extent that one end of the inflating bellows or air spring bellows (4) is turned/folded over the pot-shaped end in the form of a folded-over portion (24),
d) the inflating bellows (20) is partially pressure-relieved with partial reversing of the shortening, as a result of which the widening and the folding over of the inflating bellows are reversed but the folded-over portion of the air spring bellows (4) is retained,
e) the internal clamping ring (16) is positioned over the inflating bellows and at the clamping point (25) which is provided inside the air spring bellows (4),
f) the inflating bellows is completely pressure-relieved and the end pieces (21, 22) are moved apart from one another with the effect of completely reversing the shortening,
g) the folded-over part of the air spring bellows (4) is placed under air pressure, wherein the folded-over portion (24) of the air spring bellows (4) is also folded back and the air spring bellows (4) which is returned to its initial position/manufactured state secures the internal clamping ring (16) so as to form a radially outwardly pointing, circumferential protrusion (19), after which
h) the air spring bellows is removed from the inflating bellows/from the end pieces.

2. Method according to Claim 1, **characterized in that** the inflating bellows encloses a fabricating mandrel with a variable length.

3. Method according to Claim 1 or 2, **characterized in that**, in a predefined inflated state, the inflating bellows can be used as a mounting guide for the internal clamping ring.

## Revendications

1. Procédé de fabrication d'un soufflet (4) d'amortisseur pneumatique doté d'un anneau de serrage intérieur pour un dispositif (1) d'amortisseur pneumatique doté d'un soufflet (4) d'amortisseur pneumatique en matériau élastomère, d'un couvercle (2) d'amortisseur pneumatique et d'un piston (3) d'amortisseur pneumatique,
le soufflet (4) d'amortisseur pneumatique essentiellement libre en position d'utilisation étant fixé de manière étanche à l'air par sa première extrémité au piston (3) d'amortisseur pneumatique en formant un premier pli de déroulement (13) et par sa deuxième extrémité au couvercle (2) d'amortisseur pneumatique en formant un deuxième pli de déroulement (14) pour former avec le couvercle (2) d'amortisseur pneumatique et le piston (3) d'amortisseur pneumatique une chambre creuse (12) de volume élastique,
le dispositif (1) d'amortisseur pneumatique présentant un guide extérieur (5) en forme de manchon qui entoure tangentiellement le soufflet (4) d'amortisseur pneumatique et au moins un anneau (16) de serrage intérieur disposé à l'intérieur du soufflet (4) de ressort pneumatique,
le guide extérieur (5) étant fixé en correspondance mécanique et/ou en correspondance géométrique à l'aide de l'anneau (16) de serrage intérieur sur la surface extérieure du soufflet (4) d'amortisseur pneumatique,
le diamètre extérieur (17) de l'anneau (16) de serrage intérieur étant supérieur au diamètre extérieur (18) du soufflet (4) d'amortisseur pneumatique en conditions de délestage de pression et
l'anneau de serrage intérieur formant dans le soufflet d'amortisseur pneumatique non sous pression un bombage périphérique (19) qui est orienté radialement vers l'extérieur et qui correspond essentiellement au diamètre intérieur du guide extérieur (5),
**caractérisé en ce que**
le soufflet (4) d'amortisseur pneumatique est doté de l'anneau (16) de serrage intérieur par une opération de rabattement,
a) **en ce que** le soufflet (4) d'amortisseur pneumatique appliqué sur un soufflet gonflable (20) essentiellement cylindrique et entourant ce dernier au moins en partie est raccordé de manière étanche à l'air par au moins l'une de ses extrémités à des pièces d'extrémité (21, 22) qui font partie du soufflet gonflable, au moins l'une des pièces d'extrémité étant configurée en forme de chapeau qui entoure le soufflet gonflable et au moins l'une des pièces d'extrémité du soufflet gonflable pouvant être déplacée par rapport à l'autre pièce d'extrémité de manière à raccourcir la longueur du soufflet gonflable,
b) **en ce que** le soufflet gonflable est placé sous pression intérieure pour agrandir le soufflet d'amortisseur pneumatique qui y est appliqué,
c) **en ce que** lorsque le soufflet gonflable ou le soufflet (4) d'amortisseur pneumatique sont gonflés, les pièces d'extrémité sont rapprochées dans le sens d'un raccourcissement de la longueur efficace du soufflet gonflable ou d'un raccourcissement de la distance entre les pièces d'extrémité (21, 22), de telle sorte qu'une extrémité du soufflet gonflable ou du soufflet (4) d'amortisseur pneumatique soit rabattue au-dessus de l'extrémité en forme de chapeau sous la forme d'un repli rabattu (24),
d) **en ce que** la pression qui règne dans le soufflet gonflable (20) est partiellement délestée en inversant partiellement le raccourcissement, l'agrandissement et le rabattement du soufflet gonflable étant ainsi reculés tout en conservant le rabattement du soufflet (4) d'amortisseur pneumatique,
e) **en ce que** l'anneau (16) de serrage intérieur est placé au-dessus du soufflet gonflable et sur l'emplacement de serrage (25) prévu à l'intérieur du soufflet (4) d'amortisseur pneumatique,
f) **en ce que** la pression qui règne dans le soufflet gonflable est complètement délestée et les pièces d'extrémité (21, 22) sont écartées l'une de l'autre en inversant complètement le raccourcissement,
g) **en ce que** la partie rabattue du soufflet (4) d'amortisseur pneumatique est placée sous pression d'air, le rabattement (24) du soufflet (4) d'amortisseur pneumatique étant également rabattu et le soufflet (4) d'amortisseur pneumatique ramené dans sa position initiale ou position de fabrication fixe l'anneau (16) de serrage intérieur en formant un bombage périphérique (19) orienté radialement vers l'extérieur, suite à quoi
h) le soufflet d'amortisseur pneumatique est enlevé du soufflet gonflable et/ou des pièces d'extrémité.

2. Procédé selon la revendication 1, **caractérisé en ce que** le soufflet gonflable entoure un mandrin de fabrication de longueur variable.

3. Procédé selon les revendications 1 ou 2, **caractérisé en ce que** le soufflet gonflable peut être utilisé comme guide de montage de l'anneau intérieur de serrage dans un état de gonflement prédéterminé.
